Europäisches Patentamt

European Patent Office

Office européen des brevets

(11) Veröffentlichungsnummer: **0 221 852**
**A2**

(12) **EUROPÄISCHE PATENTANMELDUNG**

(21) Anmeldenummer: 86810488.6

(22) Anmeldetag: 30.10.86

(51) Int. Cl.⁴: **F 15 B 11/20**
**B 28 D 1/04**

(30) Priorität: 07.11.85 CH 4786/85

(43) Veröffentlichungstag der Anmeldung:
13.05.87 Patentblatt 87/20

(84) Benannte Vertragsstaaten:
AT BE CH DE ES FR GB GR IT LI LU NL SE

(71) Anmelder: **Fritz Haug AG**
**Industriestrasse 6**
**9015 St. Gallen (CH)**

(72) Erfinder: **Spiegelberg, Ulf**
**Himmelrich 10**
**CH-9203 Niederwil (CH)**

(74) Vertreter: **Wenger, René et al**
**Hepp & Partner AG Marktgasse 18**
**CH-9500 Wil (CH)**

(54) Vorrichtung zum Bearbeiten von relativ harten Baustoffen.

㊗ Der Antriebsmotor (1) treibt ein Bearbeitungswerkzeug (2), das mit Hilfe eines Vorschubmotors (3) vorgeschoben werden kann. Beide Motoren (1, 3) werden von der gleichen Hydraulikpumpe (4) mit Druckmittel versorgt. Ein Mengenteilerventil (5) teilt den von der Hydraulikpumpe kommenden Oelstrom auf, wobei ein Steuerventil (24) den Druckmittelstrom im Vorschubmotor derart steuert, dass bei steigendem Widerstand am Bearbeitungswerkzeug die Leistung am Vorschubmotor sinkt. Dadurch ist ein leistungsgeregelter Betrieb des Bearbeitungswerkzeugs möglich. Gleich wie der Vorschub kann auch die Zustellung des Bearbeitungswerkzeugs über einen Zustellmotor (7) erfolgen.

Fig. 3

**Beschreibung**

Vorrichtung zum Bearbeiten von relativ harten Baustoffen

Die Erfindung betrifft eine Vorrichtung zum Bearbeiten von relativ harten Baustoffen gemäss dem Oberbegriff von Anspruch 1. Dabei handelt es sich in erster Linie um Betonfräs- oder Betonbohrmaschinen mit diamantbestückten Werkzeugen. Im Hoch- und Tiefbau finden derartige Vorrichtungen immer häufiger Verwendung, da es oft einfacher ist, beispielsweise in einer Betonmauer bestimmte Ausschnitte nachträglich auszusågen, als diese Ausschnitte vorher zu schalen.

Das Bearbeitungswerkzeug wird in der Regel mit Hilfe eines Zahnritzels entlang einer Laufschiene vorgeschoben. Da das Drehmoment am Bearbeitungswerkzeug starken Schwankungen unterworfen ist, muss der Vorschub steuerbar sein, um eine möglichst konstante Leisung am Antriebsmotor bzw. am Bearbeitungswerkzeug zu erreichen.

Durch die WO 84/00055 ist ein Ventil für die vorgenannten Zwecke bekannt geworden, bei dem in der Vorlaufleitung zum Vorschubmotor ein druckgesteuertes Mengenbegrenzungs-Ventil angeordnet ist. Die dieser Vorlaufleitung zugeführte Oelmenge ist durch Querschnittsveränderung einstellbar. Die restliche Oelmenge wird dem Antriebsmotor zugeführt. Bei Ueberschreiten eines vorbestimmbaren Druckes wird die dem Vorschubmotor zugeführte Oelmenge weiter reduziert, so dass sich dessen Drehzahl verlangsamt.

Ein Nachteil dieser Vorrichtung besteht jedoch darin, dass eine eigentliche Leistungsregelung am Antriebsmotor nicht stattfindet. Die dem Antriebsmotor zuführbare Oelmenge ist nämlich von der jeweiligen Ventilstellung abhängig und ist somit nicht konstant. Mit einer schwankenden Oelmenge am Antriebsmotor kann jedoch keine konstante Leistung des Bearbeitungswerkzeugs erzielt werden. Bei einem Druckanstieg in der Speiseleitung wird zwar die Oelmenge in der Vorlaufleitung des Vorschubmotors reduziert und dessen Geschwindigkeit verlangsamt, die gleiche Oelmenge wird nun jedoch dem Antriebsmotor zugeführt und damit dessen Geschwindigkeit erhöht. Dies ist gerade kontraproduktiv und kann durch wechselseitige Beeinflussung der Steuerimpulse zu einem gefährlichen Hochschaukeln des Systems führen.

Es ist daher eine Aufgabe der Erfindung, die vorstehend genannten Nachteile zu vermeiden und eine Vorrichtung der eingangs genannten Art zu schaffen, bei der ein leistungskonstantes Arbeiten mit dem Antriebsmotor unabhängig von Widerstanden am Bearbeitungswerkzeug moglich ist. Ausserdem soll das System äusserst rasch reagieren, um einen unnötigen Verschleiss oder ein Festfahren des Bearbeitungswerkzeuges zu vermeiden. Diese Aufgabe wird erfindungsgemäss mit einer Vorrichtung gelöst. welche die Merkmale in Anspruch 1 aufweist.

Da das Mengenteilerventil dem Antriebsmotor eine dauernd konstante Flüssigkeitsmenge zuführt, bleibt dessen Leistung unabhängig von den Steuervorgängen am Vorschubmotor konstant. Der Steuerimpuls für das Steuerventil am Vorschubmotor wird durch den Systemdruck gebildet, der zwischen Mengenteilerventil und Antriebsmotor herrscht. Da das Mengenteilerventil praktisch unmittelbar am Antriebsmotor angeordnet ist, entspricht dieser Systemdruck praktisch dem Arbeitsdruck des Antriebsmotors. Damit werden Verzögerungen der Steuerimpulse durch Druckverluste in Leitungen und Armaturen zuverlässig ausgeschaltet.

Besonders vorteilhaft wird das Steuerventil in der Rücklaufleitung des Vorschubmotors angeordnet. Dadurch werden unnötige Druckverluste zwischen Pumpe und Vorschubmotor vermieden, welche eventuell zu einer anderen Auslegung des Vorschubmotors zwingen wurden.

Besonders vorteilhaft ist das Steuerventil ein druckgesteuertes Wegeventil, mit dem die Vorlaufleitung zwischen Mengenteilerventil und Antriebsmotor an die Rücklaufleitung des Vorschubmotors anschliessbar ist. Auf diese Weise kann die Strömung im Flüssigkeitskreislauf des Vorschubmotors präzise beeinflusst werden. Zum gleichmässigen Arbeiten des Vorschubmotors wird in dessen Rücklaufleitung vorzugsweise eine viskositätsunabhängige Drossel angeordnet. Auf diese Weise wird unabhängig vom Betriebszustand immer eine vorbestimmte Differenz zwischen der Vorlaufleitung und der Rücklaufleitung des Vorschubmotors aufrechterhalten.

Ein besonders gutes Schwingverhalten des hydraulischen Systems wird erreicht, wenn das Mengenteilerventil und das Steuerventil in einem gemeinsamen Block untergebracht sind, der unmittelbar am Antriebsmotor angeordnet ist. Druckschwankungen, verursacht durch die Elastizität der Verbindungsschläuche zur Pumpe können dadurch vermieden werden.

Wenn das Bearbeitungswerkzeug ein Kreissägeblatt ist, ist es besonders vorteilhaft, wenn neben dem Vorschubmotor für den Vorschub des Kreissägeblattes noch ein hydraulischer Zustellmotor für die Tiefenzustellung des Kreissägeblattes angeordnet ist, wobei Vorschubmotor und Zustellmotor in Serie geschaltet sind, und wenn über an diesen Motoren angeordnete Wegeventile alternativ der Vorschubmotor oder der Zustellmotor aktivierbar ist. Auch die Tiefenzustellung des Kreissägeblattes ist letztlich ein Vorschub, bei dem am Bearbeitungswerkzeug schwankende Drehmomente auftreten können. Es ist daher zweckmässig, auch die Tiefenzustellung nicht manuell, sondern leistungsgeregelt mit einem Motor durchzuführen. Die Serieschaltung wird dadurch ermöglicht, dass eine gleichzeitige Aktion des Zustellmotors und des Vorschubmotors nicht erforderlich ist.

Ausführungsbeispiele der Erfindung sind in den Zeichnungen dargestellt und werden nachstehend genauer beschrieben. Es zeigen:

Figur 1 eine erfindungsgemässe Vorrichtung in vereinfachter Darstellung,

Figur 2 eine Draufsicht auf das Bearbeitungswerkzeug gemäss Figur 1, und

Figur 3 die schematische Darstellung einer hydraulischen Steuerung mit Antriebsmotor, Vorschubmotor und Zustellmotor.

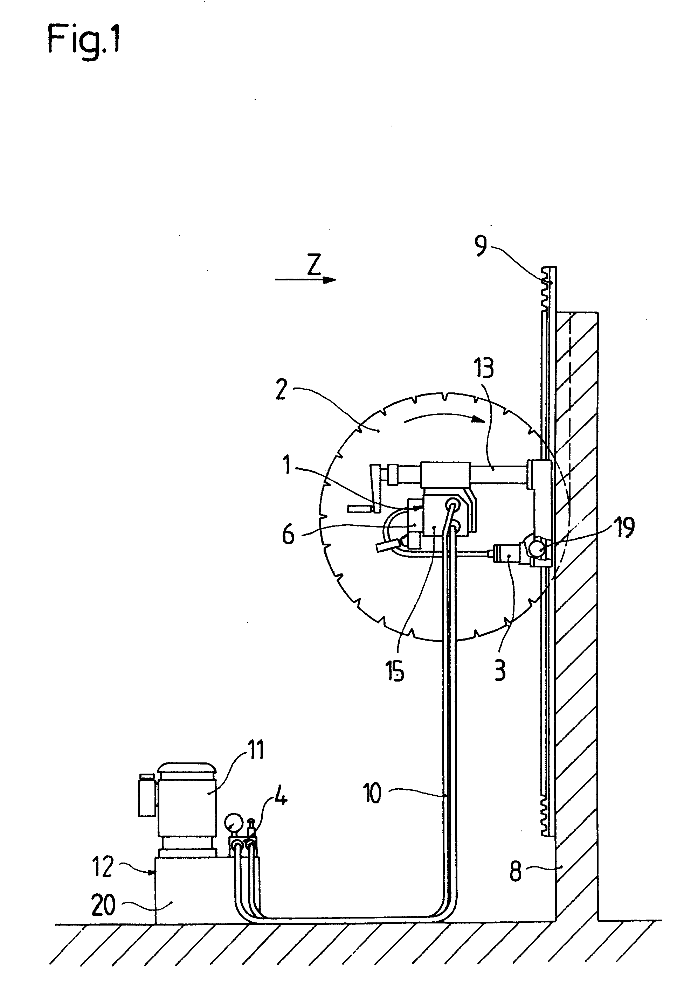

Wie in Figur 1 dargestellt, besteht die Vorrichtung im wesentlichen aus einer hydraulischen Versorgungseinheit 12 mit einem Elektromotor 11 und mit einer Hydraulikpumpe 4. Anstelle des Elektromotors könnte beispielsweise auch ein Verbrennungsmotor treten, um einen netzunabhängigen Betrieb zu gewährleisten. Das Bearbeitungswerkzeug 2 ist im vorliegenden Fall ein Kreissägeblatt, das vom Antriebsmotor 1 angetrieben wird. Unmittelbar am Antriebsmotor ist der Block 15 befestigt, zu dem die Verbindungsschläuche 10 von der Versorgungseinheit 12 führen und in dem auch das Mengenteilerventil untergebracht ist. Auch das Wegeventil 6 zum Ein- und Ausschalten des Vorschubs und das Steuerventil ist am Block 15 angeordnet. Die gesamte Anordnung ist entlang einer Führungssäule 13 verschiebbar, welche an einem Schlitten 16 befestigt ist.

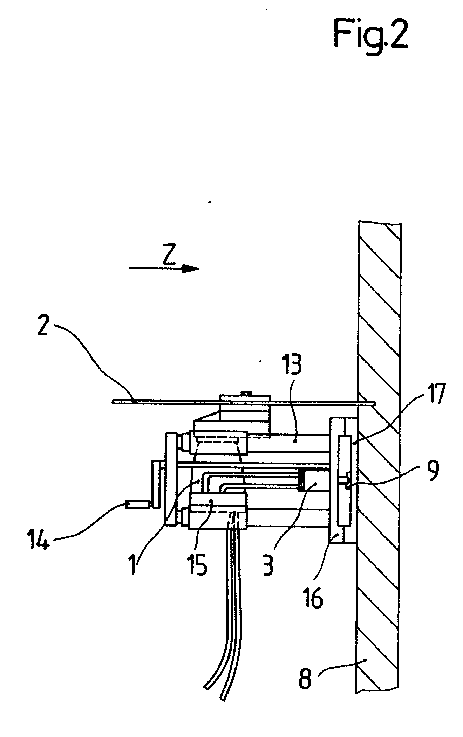

Dieser Schlitten 16 kann entlang einer Laufschiene 17 verschoben werden, wie insbesondere in Figur 2 sichtbar ist. Diese Laufschiene wird an dem zu bearbeitenden Mauerwerk 8 befestigt. In die Laufschiene 17 ist eine Zahnstange 9 integriert, welche mit einem Zahnritzel 32 am Vorschubmotor 3 kämmt. Beim Ausführungsbeispiel gemäss den Figuren 1 und 2 erfolgt die Tiefenzustellung in Pfeilrichtung Z manuell mit einer Zustellkurbel 14, mit der eine hier nicht dargestellte Spindel gedreht wird.

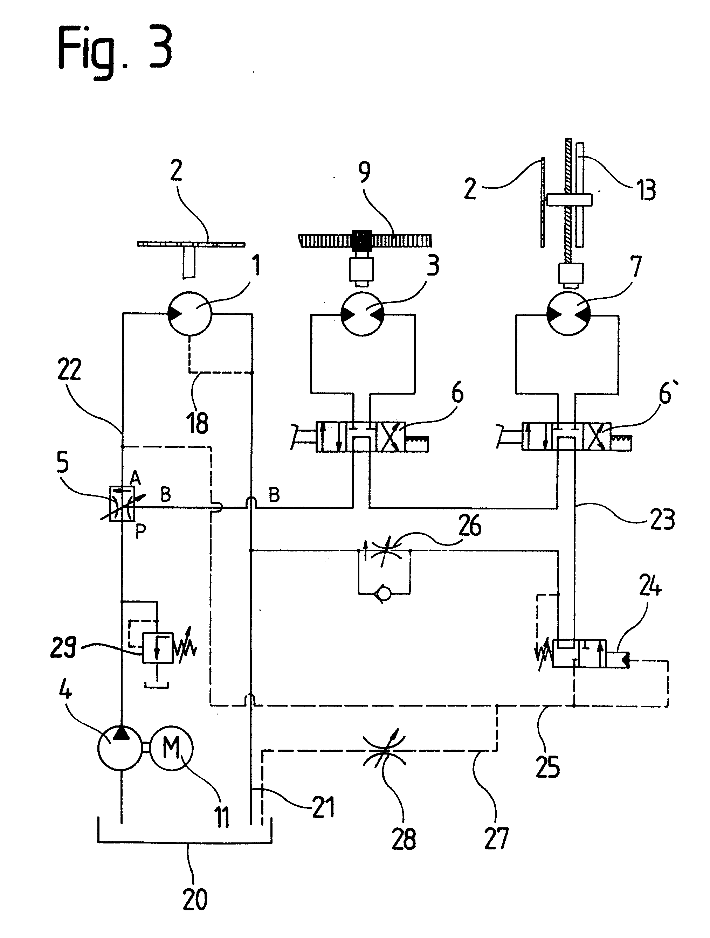

Beim hydraulischen Steuerschema gemäss Figur 3 erfolgt die Tiefenzustellung nicht manuell, sondern mit Hilfe eines Zustellmotors 7. Alle Motoren 1, 3 und 7 werden von einer einzigen Hydraulikpumpe 4 gespeist, welche durch den Elektromotor 11 angetrieben wird. Von der Hydraulikpumpe 4 führt die Druckleitung P den gesamten geförderten Oelstrom zum Mengenteilerventil 5. Dazwischen ist ein Ueberdruckventil 29 vorgesehen.

Das Mengenteilerventil 5 teilt den zur Verfügung stehenden Oelstrom auf und zweigt eine stets gleich bleibende Teilölmenge in die Vorlaufleitung 22 zum Antriebsmotor 1 ab. Diese Oelmenge wird am Mengenteilerventil 5 je nach der Auslegung des Antriebsmotors 1 einmal eingestellt und bleibt anschliessend unverändert. Vom Antriebsmotor 1 führt eine Rückflussleitung 21 das Oel zurück in den Tank 20. Mit 18 ist eine Leckölleitung angedeutet, welche Lecköl vom Antriebsmotor 1 direkt in die Rückflussleitung 21 zurückführt.

Die am Ausgang A des Mengenteilerventils 5 nicht benötigte Restölmenge gelangt über die Leitung B zum Vorschubmotor 3 bzw. zum Zustellmotor 7.

Sowohl der Vorschubmotor 3 als auch der Zustellmotor 7 kann über ein Wegeventil 6 bzw. 6' ein- und ausgeschaltet bzw. reversiert werden. Es handelt sich dabei um ein Wegeventil an sich bekannter Bauart mit vier Anschlüssen und drei Stellungen. Bei neutraler Stellung der Wegeventile 6 und 6', d.h. bei Nichtbetätigung, fliesst der Oelstrom in Leitung B zum Tank 20 ab. Sobald eines der Wegeventile 6 oder 6' eingeschaltet wird, läuft entweder der Vorschubmotor 3 oder der Zustellmotor 7. Die alternative Steuerung dieser Motoren kann aber auch noch auf andere Weise gelöst werden.

In der Rücklaufleitung 23 der Motoren 3 und 7 ist das Steuerventil 24 angeordnet, bei dem es sich um ein druckgesteuertes Wegeventil mit drei Anschlüssen und zwei Stellungen handelt. Dieses Steuerventil steht über die Drucksteuerleitung 25 in Wirkverbindung mit der Vorlaufleitung 22 zwischen dem Mengenteilerventil 5 und dem Antriebsmotor 1. Eine Ausgleichsleitung 27, deren Funktion nachstehend noch erörtert wird, führt zum Tank 20. In diese Ausgleichsleitung ist eine Drossel 28 eingebaut.

Der Steuerdruck am Steuerventil 24 ist einstellbar und wird ebenfalls entsprechend den gegebenen Parametern einmal bestimmt und dann unverändert belassen. Bei einer Versuchsanordnung wurde der Druck beispielsweise auf 130 bar eingestellt. Solange dieser eingestellte Steuerdruck in der Vorlaufleitung 22 nicht überschritten wird, wird die gesamte Oelmenge in der Leitung B über einen der Motoren 3 oder 7 und über die Drossel 26 geführt.

Tritt am Bearbeitungswerkzeug 2, beispielsweise beim Erfassen einer Eisenarmierung, ein Widerstand auf, so erhöht sich ersichtlicherweise der Druck in der Vorlaufleitung 22. Uebersteigt dieser Druck den eingestellten Steuerdruck von beispielsweise 130 bar, so beginnt sich die Position des Steuerventils 24 zu verändern. Die Rücklaufleitung 23 wird tankseitig unterbrochen und mit der Drucksteuerleitung 25 kurzgeschlossen. Dies führt ersichtlicherweise zu einem Druckausgleich im Kreislauf der Motoren 3 und 7, so dass die durch diese Motoren strömende Oelmenge bis auf Null reduziert werden kann. Die Verlangsamung bzw. die Unterbrechung des Vorschubs führt zu einer Entlastung am Arbeitswerkzeug 2, bis der Druck in der Vorlaufleitung 22 den eingestellten Steuerdruck wieder unterschreitet und das Steuerventil 24 wiederum Ruheposition einnimmt.

Während dieses ganzen Vorgangs bleibt die dem Antriebsmotor 1 zugeführte Oelmenge jedoch unverändert. Da bei Steuerstellung des Steuerventils 24 die Oelmenge in der Leitung B bzw. in der Rücklaufleitung 23 reduziert wird, anderseits aber die geförderte Gesamtölmenge gleich bleibt, muss für eine Entlastung gesorgt werden. Diese erfolgt über die Ausgleichsleitung 27 in der Drucksteuerleitung 25. Die Ausgleichsleitung 27 führt über eine Drossel 28 direkt in den Tank 20, so dass eine kurzzeitig nicht benötigte Oelmenge unter entsprechendem Druck entweichen kann. Unterhalb des Steuerdrucks von 130 bar wird zwar immer eine geringe, jedoch konstant bleibende Oelmenge über die Ausgleichsleitung 27 abfliessen. Die Drossel 28 sorgt jedoch dafür, dass diese Menge im Vergleich zur total geförderten Oelmenge nicht ins Gewicht fällt.

Selbstverständlich könnte anstelle des Steuerventils 24 auch ein anderes druckgesteuertes Ventil eingesetzt werden, das die geförderte Oelmenge im Kreislauf der Motoren 3 und 7 verringert. Auch die Entlastung dieses Kreislaufs von einer nicht benötigten Oelmenge braucht demgemäss nicht unbedingt an der Drucksteuerleitung 25 zu erfolgen. Anstelle des Kreissägeblattes kann beispielsweise auch ein Bohrwerkzeug eingesetzt werden, wobei dann ersichtlicherweise die Funktion von Vorschub und Zustellung zusammenfällt.

Fur den Betrieb der Vorrichtung wird zuerst die Laufschiene 17 in der gewünschten Richtung an dem zu schneidenden Mauerwerk 8 befestigt. Anschliessend wird der Schlitten 16 mit dem Bearbeitungswerkzeug 2 auf die Laufschiene 17 aufgeschoben. Dann wird die Hydraulikpumpe 4 betätigt, so dass das Bearbeitungswerkzeug 2 im Leerlauf dreht. Anschliessend erfolgt über die Zustellkurbel 14 oder, beim Ausführungs beispiel gemäss Figur 3, durch Betätigen des Wegeventils 6′ die Tiefenzustellung des Bearbeitungswerkzeugs 2, bis dieses die gewünschte Schnittiefe im Mauerwerk 8 erreicht hat. Dann wird das Wegeventil 6 betätigt, wobei das Zahnritzel 19 den Schlitten 16 an der Zahnstange 9 in der Laufschiene 17 vorwärts bewegt. Die Bedienungsperson muss dem Vorschubvorgang an sich keine besondere Beachtung schenken, da das Steuerventil 24 die Leistung am Bearbeitungswerkzeug regelt. Der Vorschubvorgang kann jederzeit durch Betätigung des Wegeventils 6 unterbrochen werden. In bestimmten Anwendungsfällen wäre es auch denkbar, das System derart zu steuern, dass ein Vorschub und eine Zustellung bei stillstehendem Antriebsmotor möglich ist.

**Patentansprüche**

1. Vorrichtung zum Bearbeiten von relativ harten Baustoffen mit einem durch eine gemeinsame Hydraulikpumpe (4) gespeisten Antriebsmotor (1) für ein rotierendes Bearbeitungswerkzeug (2) und wenigstens einem Vorschubmotor (3, 7) zum Vorschieben des Bearbeitungswerkzeuges, wobei die dem Vorschubmotor zuführbare Flüssigkeitsmenge mit einem Steuerventil in Abhängigkeit vom Widerstand am Bearbeitungswerkzeug steuerbar ist, dadurch gekennzeichnet, dass zwischen der Hydraulikpumpe (4) einerseits und dem Antriebsmotor (1) bzw. dem Vorschubmotor (3, 7) andererseits ein Mengenteilerventil (5) angeordnet ist, über das dem Antriebsmotor (1) eine dauernd konstante Flüssigkeitsmenge zuführbar ist, und dass im Flüssigkeitskreislauf des Vorschubmotors (3, 7) ein Steuerventil (24) zur Begrenzung der Durchflussmenge angeordnet ist, welches in Abhängigkeit vom Systemdruck zwischen Mengenteilerventil (5) und Antriebsmotor (1) steuerbar ist.

2. Vorrichtung nach Anspruch 1, dadurch gekennzeichnet, dass das Steuerventil in der Rücklaufleitung des Vorschubmotors angeordnet ist.

3. Vorrichtung nach Anspruch 2, dadurch gekennzeichnet, dass das Steuerventil ein druckgesteuertes Wegeventil ist, mit dem die Vorlaufleitung zwischen Mengenteilerventil und Antriebsmotor an die Rücklaufleitung des Vorschubmotors anschliessbar ist.

4. Vorrichtung nach einem der Ansprüche 1 bis 3, dadurch gekennzeichnet, dass in der Rücklaufleitung des Vorschubmotors eine Drossel angeordnet ist.

5. Vorrichtung nach einem der Ansprüche 1 bis 4, dadurch gekennzeichnet, dass das Mengenteilerventil (5) und das Steuerventil (24) in einem gemeinsamen Block (15) untergebracht sind, der unmittelbar am Antriebsmotor (1) angeordnet ist.

6. Vorrichtung nach einem der Ansprüche 1 bis 5, bei der das Bearbeitungswerkzeug ein Kreissägeblatt ist, dadurch gekennzeichnet, dass neben dem Vorschubmotor (3) für den Vorschub des Kreissägeblattes noch ein hydraulischer Zustellmotor (7) für die Tiefenzustellung des Kreissägeblattes angeordnet ist, wobei Vorschubmotor und Zustellmotor in Serie geschaltet sind, und dass über an diesen Motoren angeordnete Wegeventile alternativ der Vorschubmotor oder der Zustellmotor aktivierbar ist.

Fig.1

Fig.2

0221852

0221852

# Fig. 3